(19) Europäisches Patentamt
European Patent Office
Office européen des brevets

(11) **EP 3 045 575 A1**

(12) **EUROPEAN PATENT APPLICATION**
published in accordance with Art. 153(4) EPC

(43) Date of publication:
**20.07.2016  Bulletin 2016/29**

(21) Application number: **14822242.5**

(22) Date of filing: **23.06.2014**

(51) Int Cl.:
***D01F 9/127*** *(2006.01)*      ***B82Y 30/00*** *(2011.01)*

(86) International application number:
**PCT/ES2014/070509**

(87) International publication number:
**WO 2015/004295 (15.01.2015 Gazette 2015/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.07.2013  ES 201331057**

(71) Applicant: **Consejo Superior de Investigaciones Cientificas (CSIC)
28006 Madrid (ES)**

(72) Inventors:
• **CAMEAN MARTINEZ, Ignacio**
  **E-33011 Oviedo (Asturias) (ES)**

• **CUESTA PEDRAYES, Nuria**
  **E-33011 Oviedo (Asturias) (ES)**
• **DE LLOBET CUCALON, Saul**
  **E-50015 Zaragoza (ES)**
• **GARCIA SUAREZ, Ana Beatriz**
  **E-33011 Oviedo (Asturias) (ES)**
• **MOLINER ALVAREZ, Rafael**
  **E-50015 Zaragoza (ES)**
• **PINILLA IBARZ, José Luís**
  **E-50015 Zaragoza (ES)**
• **RAMOS ALONSO, Alberto**
  **E-33011 Oviedo (Asturias) (ES)**
• **SUELVES LAIGLESIA, Isabel**
  **E-50015 Zaragoza (ES)**

(74) Representative: **Pons
Glorieta Ruben Dario 4
28010 Madrid (ES)**

(54) **METHOD FOR PREPARING GRAPHITE NANOFIBRES FROM BIOGAS**

(57)     The present invention relates to the production of synthetic graphite fibres of nanometric size using a carbon material from a renewable source, which is obtained together with a hydrogen-rich combustible gas in the process for recovery of biogas by means of catalytic breakdown. Said material, which consists of carbon nanofilaments is gradually transformed into nanofibres with a graphite structure by means of a thermal treatment in an inert atmosphere at temperatures which are no lower than 2400 ᵒC, in part due to the presence of metal residues that catalyse the process. Said synthesised carbon materials have high value added and many applications, including the use thereof as an anode in ion-lithium batteries, which are essential components of electronic devices such as mobile telephones or portable computers..

Figure 1

EP 3 045 575 A1

**Description**

**SECTOR AND OBJECT OF THE INVENTION**

The process of the present invention pertains to the sector devoted to the development of new materials and the applications thereof.

An object of the present invention is a process for preparing graphite nanofibres, which comprises a step for performing the catalytic decomposition of a biogas composed of methane and carbon dioxide at a temperature ranging between 500ºC and 800ºC, to obtain carbon bio-nanofilaments; subsequently, the carbon bio-nanofilaments are subjected to heat treatment under an inert atmosphere, following a heating programme, to a final temperature ranging between 2400ºC and 3000ºC, to obtain the graphite nanofibres.

Other objects of the present invention are the graphite nanofibres obtained by means of the aforementioned process, as well as the use thereof as active materials in anodes for rechargeable lithium-ion batteries.

**PRIOR ART**

Carbon nanofibres (CNFs) have diameters of < 100 nm and are formed by graphene sheets stacked in different ways: perpendicular, parallel or inclined with respect to the fibre axis, depending on the preparation method and the conditions. The production of CNFs by chemical vapour deposition, using CO and different hydrocarbons, over transition-metal catalysts, such as Fe, Co or Ni, has been widely studied, even from the standpoint of large-scale commercialisation, since, in the 1970s (S. D. Robertson, Carbon 8, 365-368, 1970), the formation of carbon materials with different structures was observed on the surface of the catalyst during the catalytic decomposition of methane (CDM). Specifically, the development and refinement of the CDM for the simultaneous production of CNFs and $CO_2$-free hydrogen has been the subject of numerous research projects (Y. Li et al., Catalysis Today 162, 1-48, 2011) and patents (Suelves et al., ES2345805).

CNFs obtained from the CDM have relatively high thermal and electrical conductivities as compared to other carbon materials. These properties, jointly with their nanometric size and their mesoporous character, make them suitable materials for various applications. However, in general, various post-production treatments of the CNFs are necessary in order to optimise their properties with a view to their subsequent use, including high-temperature heat treatment (> 2000ºC), which improves the graphite-type three-dimensional structural arrangement and the electrical conductivity, and reduces the active centres on the surface, to obtain, in some cases, materials similar to the synthetic graphite from petroleum derivatives produced in industry (A. Ramos et al., Carbon 59, 2-32, 2013). The graphitisation of the CNFs produced by the CDM in a fluidised-bed reactor, using Cu-doped Ni catalysts supported on $SiO_2$, $Al_2O_3$, $TiO_2$ or MgO, has been studied by García et al. (Carbon 47, 2563-79, 2009) and Caméan et al. (Carbon 50, 5387-94, 2012). To this end, the CNFs were treated in a graphite electric furnace within the temperature range 1800-2800ºC for 1 h under a flow of argon. The materials prepared from the CNFs were characterised, amongst other techniques, by means of X-Ray Diffraction (XRD), Raman Spectroscopy and Transmission Electron Microscopy (TEM). The influence of both the CNFs' treatment temperature and the metal species present (Ni, Si, Ti, Al, Mg, resulting from the catalyst used in the CDM) was also studied. The analysis of the results of these works clearly showed that the metal species catalyse the graphitisation of the CNFs, and graphite materials with a nanofibre morphology (graphite nanofibres), and crystal lattice and texture parameters within the range of the micrometric-size synthetic graphite used in commercial lithium-ion batteries, were prepared. These graphite nanofibres were used as anodes for lithium-ion batteries, and presented an excellent performance, both in terms of the charge capacity provided and the retention of said capacity during the cycling (~ 320 mA h g$^{-1}$ after 50 discharge-charge cycles). Moreover, it was concluded that this type of materials are particularly indicated to work at high current intensities, due to their nanometric size, which facilitates the diffusion of the lithium ions in their structure (Caméan et al., Journal of Power Sources 198, 303-7, 2012).

However, despite the quality and performance of the graphite nanofibres prepared from the CNFs produced in the CDM, it must be borne in mind that methane is obtained from natural gas (90%-95% $CH_4$), which is a fossil fuel and, therefore, a non-renewable energy source. On the basis of these considerations, these CNFs were replaced by others obtained from the catalytic decomposition of biogas, called carbon bio-nanofibres, CBNFs. Therefore, the main object of this invention is to produce synthetic nanometric-size graphite fibres (graphite nanofibres, GNFs) with suitable properties in terms of structure, texture and electrical conductivity, to be used as anodes for lithium-ion batteries and/or other energy storage devices, starting from the CBNFs and using a heat treatment at temperatures greater than 2000ºC.

The process for the catalytic decomposition of biogas for the simultaneous production of carbon nanofibres (CBNFs) and synthesis gas has been studied by S. de Llobet et al. (International Journal of Hydrogen Energy 37, 7067-7076, 2012) and Pinilla et al. (Fuel 90, 2245-2253, 2011), using Ni catalysts. In this process, different $CH_4$:$CO_2$ mixtures (60:40, 50:50 and 70:30 by volume), which simulate the possible concentrations in the biogas, various types of reactors (fixed-, rotary-, fluidised-bed reactors), and different temperature ranges may be used, to obtain CBNFs with very different structural characteristics. The main novelty of this process lies in the use of biogas as the starting material, without the need for a purification step to remove the $CO_2$, and, in fact, this is the main difference with respect to Tada *et al.*'s patent (Patent US2006/0257310), which develops a process for the production of carbon and hydrogen nanomaterials from methane, and propose using methane obtained from the purification of biogas, i.e. methane with small quantities of $CO_2$ (0.05%-10% by volume). Therefore, it would be interesting to develop a process for the preparation of graphite nanofibres using carbon nanofibres obtained from a biogas, without the need to reduce the $CO_2$ content present therein, as the precursors.

**EXPLANATION OF THE INVENTION**

A first object of the present invention is a process for preparing graphite nanofibres from biogas without modifying its original composition, with proportions of methane and carbon dioxide by volume ranging between 40% and 80%, for methane, and 60% and 20%, for carbon dioxide, which comprises the following steps:

a) a first step for performing the catalytic thermal decomposition of the biogas within a temperature range of 500ºC-800C, for a period of time of at least one hour, to obtain carbon bio-nanofilaments;
b) a second step, wherein the carbon bio-nanofilaments are subjected to heat treatment, at atmospheric pressure and under a flow of inert gas, following a heating programme, to a final temperature ranging between 2400ºC and 3000ºC, which is maintained for a period of time ranging between 30 min and 4 hours.

In a preferred embodiment, the biogas decomposition step is performed in the presence of a metal catalyst selected from Ni, Co, Fe, Mo, Cu and Pd, supported on materials selected from $Al_2O_3$, $SiO_2$, $TiO_2$ and MgO; it is especially preferable that the catalyst be Ni supported on $Al_2O_3$, with an Ni:Al molar ratio ranging between 0.17:3.33 and 1.53:0.37.
In a particular embodiment of the process, the catalyst is Ni supported on $Al_2O_3$, with an Ni:Al molar ratio of 2:1, prepared by means of the fusion method and reduced in a hydrogen stream at 550ºC for 1 h prior to use.
In all the embodiments of the catalytic decomposition step described, the biogas preferably has a $CH_4:CO_2$ composition, with a volume ratio selected from 60:40 and 50:50, and is fed at a space velocity ranging between 3 and 120 $L_N h^{-1} \cdot g^{-1}$.
Within the specified temperature range, in particular embodiments of the process, the catalytic decomposition of the biogas is performed at a temperature of 600ºC or a temperature of 700ºC.
In regards to the step for performing the heat treatment of the carbon bio-nanofilaments, the gas which forms the inert atmosphere is Ar and the heating programme comprises the following ramps:

- 50ºC.$min^{-1}$ within the interval between the initial temperature and 700ºC;
- 100ºC.$min^{-1}$ within the interval between 700ºC and 1000ºC;
- 25ºC.$min^{-1}$ within the interval between 1000ºC a 2000ºC;

and, finally, 10ºC.$min^{-1}$ within the interval between 2000ºC and the final temperature, which ranges between 2400ºC and 3000ºC.
The final temperature in various particular embodiments of the process is set at 2400ºC, 2500ºC, 2600ºC, 2700ºC, 2800ºC or 2900ºC, and said final temperature is maintained for a period of 1 hour.
Optionally, following the step for performing the catalytic decomposition of biogas, and prior to the heat treatment in an inert atmosphere, silica powder is added to the carbon bio-nanofilaments, until an atomic ratio between Si and Ni ranging between 1 and 7 is reached, preferably under mechanical stirring, in order to obtain homogeneous mixtures.
Another object of the present invention are the graphite nanofibres obtained by means of the process described above. Said graphite nanofibres present:

- spacings between planes ($d_{002}$) ranging between 0.3354 and 0.3410 nm;
- mean microcrystal sizes along the c-axis ($L_c$) ranging between 6 and 70 nm;
- mean microcrystal sizes along the a-axis ($L_a$) ranging between 10 and 100 nm.

Finally, another object of the present invention is the use of said graphite nanofibres as active materials in anodes for rechargeable lithium-ion batteries.

**BRIEF DESCRIPTION OF THE FIGURES**

**Figure 1**: SEM image of the CBNFs.

**Figure 2**: SEM image of the GNF-6-7/2800 graphite nanofibres.

**Figure 3**: Discharge capacity vs number of cycles, at different current intensities, of the GNF-6-7/2800 graphite nanofibres.

**Figure 4**: Discharge capacity vs number of cycles, at different current intensities, of a commercial micrometric-size graphite.

## EMBODIMENT OF THE INVENTION

### Example 1. Production of carbon bio-nanofibres (CBNFs)

The CBNFs are obtained by the catalytic decomposition of biogas in a rotary-bed reactor heated in an electric furnace. Specifically, in this example, we used a $CH_4:CO_2$ mixture with a volume ratio of 60:40, and a nickel catalyst supported on alumina, with an Ni:Al molar ratio of 2:1, which had been prepared by means of the fusion method and reduced in a hydrogen stream at 550ºC for 1 h prior to use. The biogas decomposition experiments were performed at two different temperatures, 600ºC and 700ºC, using a space velocity of 30 $LNh^{-1} \cdot g^{-1}$. The CBNFs obtained in these experiments were named by adding the number 6, for 600ºC, or the number 7, for 700ºC, to the general acronym CBNF, namely CBNF-6 and CBNF-7. The production (gram of carbon per gram of catalyst per hour, $gC \cdot gCar^{-1} \cdot h^{-1}$) and the elemental analysis of these materials are shown in **Table 1.** The carbon, nitrogen and hydrogen content in the CBNFs was determined by total oxidation of the sample and subsequent detection in an analyser, whereas the nickel and aluminium elements from the catalyst were analysed by means of ICP mass spectrometry.

**Table 1.** Production and elemental analysis (% weight) of the CBNFs obtained by the catalytic decomposition of biogas ($CH_4:CO_2$ v:v ratio 60:40)

| CBNFs | Production ($gC \cdot gcat^{-1} \cdot h^{-1}$) | C (%) | N (%) | H (%) | Ni (%) | Al (%) |
|---|---|---|---|---|---|---|
| CBNF-6 | 2.0 | 91.11 | 0.11 | 0.16 | 3.70 | 1.43 |
| CBNF-7 | 1.9 | 89.25 | 0.15 | 0.10 | 3.83 | 1.07 |

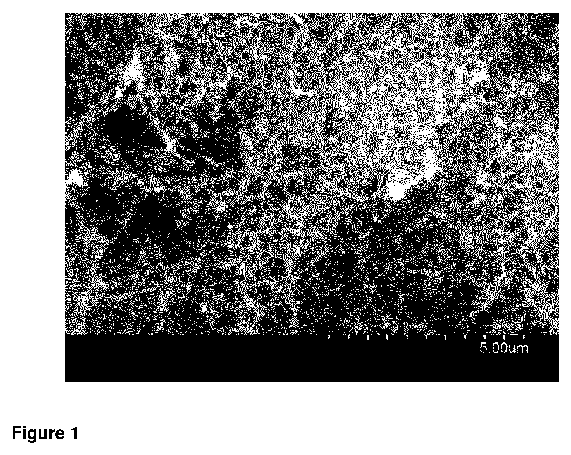

The CBNFs, which are composed primarily of carbon, are deposited on the catalyst in the form of nanofilaments a few microns in length; consequently, they contain metal particles, some of which are located at the ends, as may be observed in the image obtained by means of SEM electron microscopy of **Figure 1.** Moreover, the presence of metal remainders heterogeneously distributed amongst the carbon nanofilaments is also observed.

### Example 2. Production of graphite nanofibres (GNFs)

The production of GNFs is performed by subjecting the CBNFs obtained as a co-product of the catalytic decomposition of biogas to heat treatment (see Example 1) in a three-phase graphite resistance furnace, equipped with a controller/programmer and an external refrigeration system for the water jackets in the heating chamber and the electrical connections, in order to maintain the temperature thereof below 35ºC. The temperature is measured by means of a type-K Ni/Cr thermocouple located in the central area of the heating chamber, and an optical pyrometer capable of measuring temperatures of up to 3000ºC, by means of a graphite that tube goes through the furnace wall at the same level as the thermocouple. When the furnace reaches 950ºC, the thermocouple is automatically removed from the heating chamber interior and, simultaneously, the pyrometer starts to operate. In a prototype experiment, the sample is deposited on a cylindrical graphite sample carrier that is introduced into the furnace, which is hermetically sealed by means of an anchoring system. Subsequently, and prior to the heat treatment, the furnace is purged by means of successive vacuum/Ar flow cycles, in order to guarantee the absence of oxygen in the interior. The CBNFs were treated under a flow of Ar (2 $lmin^{-1}$) at temperatures of 2600ºC and 2800ºC for 1 h, using the following heating ramps: 50ºCmin$^{-1}$ within the interval 0ºC-700ºC; 100ºCmin$^{-1}$ within the interval 700ºC-1000ºC; 25ºCmin$^{-1}$ within the interval 1000ºC-2000ºC; and, finally, 10ºCmin$^{-1}$ within the interval 2000ºC-2600ºC or 2800ºC. The GNFs obtained were named on the basis of the corresponding CBNF, by adding the treatment temperature. For example, GNF-6/2800 refers to the graphite nanofibres obtained from CBNF-6 by heat treatment at 2800ºC under the aforementioned conditions.

In addition to the CBNFs directly produced by the catalytic decomposition of biogas (CBNF-6 and CBNF-7), others were prepared starting from them, by the addition of different quantities of silica powder (up to Si/Ni atomic ratios in the nanofibre of 1, 5 and 7), followed by mechanical stirring in order to obtain homogeneous mixtures. These new CBNFs, which are named by adding said Si/Ni ratio to the original nanofibre name (for example, CBNF-6-1 is prepared from CBNF-6 by adding silica up to an Si/Ni ratio of 1), were also subjected to heat treatment at 2800°C, under the aforementioned conditions, to prepare the GNFs.

**Example 3. Evaluation of the quality of the graphite nanofibres (GNFs)**

The GNFs prepared from the CBNFs were characterised by means of X-ray diffraction (XRD) and the following crystal lattice parameters were determined: spacing between planes, $d_{002}$, and crystal sizes along the axes, the perpendicular axis, $L_c$, and the basal axis, $L_a$. The diffractograms used to calculate said parameters were obtained in a device equipped with a monochromatic CuK$\alpha$ X-ray tube, a Göbel mirror and a parallel radiation detector. The samples were prepared by means of the powder method, using a glass sample carrier. The equipment conditions under which the diffractograms were obtained are shown in **Table 2.** For each material, three measurements were taken, each from a different section representative of the sample, which made it possible to obtain precise values for the lattice parameters and determine the error in the calculation thereof. The peak width at mid-height, $\beta$, was corrected in order to account for the widening of the equipment, according to the expression: $\beta = \sqrt{B^2 - b^2}$

In order to do so, the obtainment of the diffractogram of a pure, well-crystallised reference substance, in this case Si, under the same conditions makes it possible to correct the experimental pulse width, which was evaluated to be 0.16°.

Table 2. Measurement parameters used for the XRD analysis of the materials

| Parameter | Value |
|---|---|
| Intensity | 40 mA |
| Voltage | 40 kV |
| Step size | 0.02° |
| Step time | 3 s |
| Initial position | 5° |
| Final position | 90° |
| Detector Type | Scintillation |

The spacing between two lattice planes of the family of planes (002), $d_{002}$, was calculated using Bragg's law, which sets the necessary geometric conditions under which X-ray diffraction is produced in crystals:

$$d_{002} = \frac{\lambda}{2\sin\theta_{002}}$$

The crystal sizes along the c axis, $L_c$, and along the basal plane, $L_a$, were obtained using the following equations:

$$L_c = \frac{0.9\lambda}{\beta\cos(\theta_{002})} \qquad L_a = \frac{1.84\lambda}{\beta\cos(\theta_{110})}$$

$\theta$ = Bragg diffraction angle of peaks (002) and (110) expressed in radians
$\lambda$ = wavelength
$\beta$ = peak width at mid-height expressed in radians

The degree of structural order of a given material and, consequently, its quality and possible applications, is estimated on the basis of the lattice parameter values. As the two-three-dimensional ordering of the aromatic sheets improves, the spacing between planes, $d_{002}$, decreases, and may reach a minimum value of 0.3354 nm, which corresponds to the theoretical value of the graphite monocrystal. At the same time, the crystal grows both along the basal plane, $L_a$, and along the normal plane, $L_c$. The lattice parameters of the GNFs prepared and the CBNFs used as starting materials are shown in **Table 3.**

**Table 3.** Crystal lattice parameters ($d_{002}$, $L_c$, $L_a$) of the CBNFs (CBNF-6 and CBNF-7) and **the GNFs prepared by means of heat treatment**

| Material | $d_{002}$ (nm) | $L_c$ (nm) | $L_a$ (nm) |
|---|---|---|---|
| CBNF-6 | 0.3417 | 6.0 | 15.5 |
| **GNF-6/2600** | **0.3410** | **9.3** | **25.4** |
| **GNF-6/2800** | **0.34 07** | **9.8** | **26.5** |
| **GNF-6-1/280 0** | **0.3399** | **10.1** | **34.2** |
| **GNF-6-5/2800** | **0.3380** | **14.9** | **51.3** |
| **GNF-6-7/2800** | **0.3370** | **21.6** | **55.9** |
| CBNF-7 | 0.3424 | 5.7 | 13.7 |
| **GNF-7/2600** | **0.3423** | **6.7** | **22.4** |
| **GNF-7/2800** | **0.3420** | **7.1** | **26.4** |
| **GNF-7-1/2800** | **0.3402** | **9.3** | **41.0** |
| **GNF-7-5/2800** | **0.3367** | **25.1** | **57.3** |
| **GNF-7-7/2800** | **0.3364** | **31.1** | **62.9** |

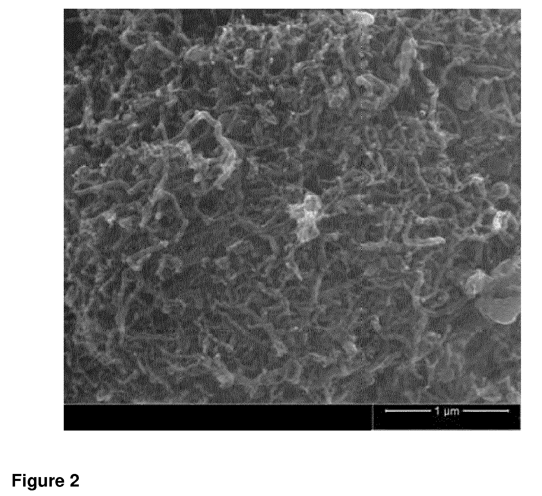

The GNFs prepared have a high degree of three-dimensional structural order, especially those obtained from the CBNFs with greater Si/Ni atomic ratios, for example GNF-7-7/2800, due to the catalytic effect of these elements on the graphitisation of carbon materials. In general, as may be observed from the structure of the nanofilaments in **Figure 2**, high-quality GNFs were prepared that, moreover, have lattice parameters that are completely comparable to those of commercial micrometric-size synthetic graphites, produced from petroleum derivatives, which are being used in very different industrial applications, including electrodes for the steel and aluminium industries, anodes for commercial lithium-ion batteries and fuel cell components for the production of hydrogen.

**Example 4. Application of the graphite nanofibres (GNFs) as anodes for lithium-ion batteries**

In the first place, the working electrode is prepared. To this end, 80 mg of GNF (active material) are mixed with 20 mg of a polymer that acts as a binding agent, in this case polyvinylidene fluoride (PVDF), and a few drops of an organic solvent, in this case 1-methyl-2-pyrrolidone, are added to the mixture, in order to form a suspension which is subsequently spread on the surface of a previously-weighed Cu sheet 25-$\mu$m thick and 12 mm in diameter. The copper sheet, coated with a thin layer of the suspension, is dried in a stove at 120ºC under vacuum for, at least, 2 hours, in order to remove the solvent. Once it is dried, a pressure of 1 t is applied with a hydraulic press and, thereafter, it is weighed in order to determine the quantity of active material, on the basis of the difference.

The working electrode, formed by the composite GNF/PVDF on the copper sheet is electrochemically characterised using a Swagelok cell model laboratory equipped with two electrodes, the working electrode and the counter electrode, which is assembled inside a glove box wherein the levels of $H_2O$ and $O_2$ are lower than 0.1 ppm and which uses Ar as the working gas. This cell model has two external teflon straight connectors, and the working electrode, two 12-mm-diameter glass fibres impregnated with the electrolyte and the counter electrode are placed therein. The electrolyte is a 1 M solution of $LiPF_6$ in a 1:1 mixture by weight of ethylene carbonate (EC) and diethyl carbonate (DEC), and the counter electrode is a lithium chip 12 mm in diameter. A stainless steel collector is placed at the ends of each connector, which allows for passage of the electric current. The cells thus assembled, which have an initial voltage of 3-3.3 V, are connected to a potentiostat/galvanostat and subjected to galvanostatic cyclings (successive discharge-charge cycles at a constant current intensity) at different current densities, between voltages of 2.1 V-0.003 V, until 50 cycles are completed.

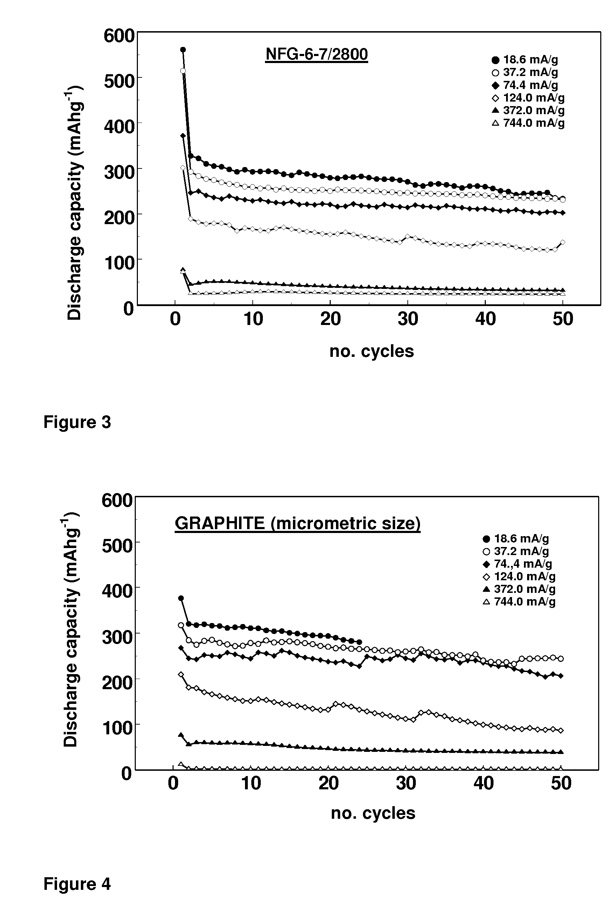

**Figure 3** shows, as an example, the discharge capacity, at current densities ranging between 18.6-744.0 mAg$^{-1}$, of the cell wherein the graphite nanofibre named GNF-6-7/2800 was used as the active material in the working electrode (see **Table 3** and **Figure 2**).

The GNF-6-7/2800 graphite nanofibres exhibit a good cyclability (retention of the discharge capacity throughout the cycling), even at high current densities. Moreover, the discharge capacities provided by these GNFs are comparable to and even higher than (at current densities > 100 mAg$^{-1}$) those of a synthetic micrometric-size graphite used as an anode for commercial lithium-ion batteries (**Figure 4**). The nanometric size of the GNFs favours the diffusion of the lithium ions in the structure and, as the current density, i.e. the charge-discharge rate in the cell, increases, this positive effect becomes more evident.

**Claims**

1. Process for preparing graphite nanofibres from biogas, which comprises the following steps:

   a) a first step for performing the catalytic thermal decomposition of the biogas within a temperature range between 500ºC and 800ºC, for a period of time of at least one hour, to obtain carbon bio-nanofilaments;
   b) a second step, wherein the carbon bio-nanofilaments are subjected to heat treatment, at atmospheric pressure and under a flow of inert gas, following a heating programme, to a final temperature ranging between 2400ºC and 3000ºC, which is maintained for a period of time ranging between 30 min and 4 hours;

   **characterised in that** the process starts from biogas without modifying the original composition thereof, with proportions of methane and carbon dioxide by volume ranging between 40% and 80%, for methane, and between 60% and 20%, for carbon dioxide.

2. Process according to claim 1, **characterised in that** the biogas decomposition step is performed in the presence of a metal catalyst selected from Ni, Co, Fe, Mo, Cu and Pd, supported on materials selected from $Al_2O_3$, $SiO_2$, $TiO_2$ and MgO.

3. Process according to claim 2, **characterised in that** the catalyst is Ni supported on $Al_2O_3$, with an Ni:Al molar ratio ranging between 0.17:3.33 and 1.53:0.37.

4. Process according to claim 3, **characterised in that** the catalyst is Ni supported on $Al_2O_3$, with an Ni:Al molar ratio of 2:1, prepared by means of the fusion method and reduced in a hydrogen stream at 550ºC for 1 h prior to use.

5. Process according to any of claims 1 to 4, **characterised in that** the biogas in the catalytic decomposition step has a $CH_4$:$CO_2$ composition, with a volume ratio selected from 60:40 and 50:50, which is fed at a space velocity ranging between 3 and 120 $L_N h^{-1} \cdot g^{-1}$.

6. Process according to any of claims 1 to 5, **characterised in that** the catalytic decomposition of the biogas is performed at a temperature of 600ºC.

7. Process according to any of claims 1 to 5, **characterised in that** the catalytic decomposition of the biogas is performed at a temperature of 700ºC.

8. Process according to any of claims 1 to 7, **characterised in that** the gas that makes up the inert atmosphere for the heat treatment of the carbon bio-nanofilaments is Ar.

9. Process according to claim 8, **characterised in that** the heating programme comprises the following ramps:

   - 50ºC.$min^{-1}$ within the interval between the initial temperature and 700ºC;
   - 100ºC.$min^{-1}$ within the interval between 700ºC and 1000ºC;
   - 25ºC.$min^{-1}$ within the interval between 1000ºC and 2000ºC;

   and, finally, 10ºC.$min^{-1}$ within the interval between 2000ºC and the final temperature, which ranges between 2400ºC and 3000ºC.

10. Process for preparing graphite nanofibres according to claim 9, **characterised in that** the final temperature is 2400ºC.

11. Process according to claim 9, **characterised in that** the final temperature is 2500ºC.

12. Process according to claim 9, **characterised in that** the final temperature is 2600ºC.

13. Process according to claim 9, **characterised in that** the final temperature is 2700ºC.

14. Process according to claim 9, **characterised in that** the final temperature is 2800ºC.

15. Process according to claim 9, **characterised in that** the final temperature is 2900ºC.

**16.** Process according to any of claims 9 to 15, **characterised in that** the final temperature is maintained for a period of 1 hour.

**17.** Process according to any of claims 1 to 16, **characterised in that**, following the catalytic decomposition of the biogas, and prior to the heat treatment under an inert atmosphere, silica powder is added to the carbon bio-nanofilaments until an atomic ratio between Si and Ni ranging between 1 and 7 is reached.

**18.** Process according to claim 17, **characterised in that** the silica is added under mechanical stirring, in order to obtain homogeneous mixtures.

**19.** Graphite nanofibres obtained by means of a process according to claims 1 to 18, **characterised in that** they present:

- spacings between planes ($d_{002}$) ranging between 0.3354 and 0.3410 nm;
- mean microcrystal sizes along the c axis ($L_c$) ranging between 6 and 70 nm;
- mean microcrystal sizes along the a axis ($L_a$) ranging between 10 and 100 nm.

**20.** Use of graphite nanofibres according to claim 19, as active materials in anodes for rechargeable lithium-ion batteries.

**Figure 1**

**Figure 2**

Figure 3

Figure 4

# INTERNATIONAL SEARCH REPORT

| International application No. |
| --- |
| PCT/ES2014/070509 |

### A. CLASSIFICATION OF SUBJECT MATTER

*D01F9/127* (2006.01)
*B82Y30/00* (2011.01)
According to International Patent Classification (IPC) or to both national classification and IPC

### B. FIELDS SEARCHED

Minimum documentation searched (classification system followed by classification symbols)
D01F, B82Y

Documentation searched other than minimum documentation to the extent that such documents are included in the fields searched

Electronic data base consulted during the international search (name of data base and, where practicable, search terms used)

EPODOC, INVENES, WPI, XPESP, XPESP2, CAPLUS

### C. DOCUMENTS CONSIDERED TO BE RELEVANT

| Category* | Citation of document, with indication, where appropriate, of the relevant passages | Relevant to claim No. |
| --- | --- | --- |
| A | GARCIA et al. The graphitization of carbon nanofibers produced by catalytic decomposition of methane: Synergetic effect of the inherent Ni and Si. Fuel ,Vol. 89, 2010, pages 2160 a 2162, paragraph 2 | 1-20 |
| A | CAMEÁN et al. GRaphitized carbon nanofibers for use as anodes in lithium-ion batteries: Importance of textural and structural properties. Journal of Power Sources, Vol. 198, 2012, pages 303 a 307, paragraphs 2.1 and 2.2 | 1-20 |
| A | García et al. The graphitization of carbon nanofibers produced by the catalytic decomposition of natural gas. Carbon, Vol. 47, 2009, pages 2563 a 2570,paragraphs 2.1 and 2.2 | 1-20 |

☒ Further documents are listed in the continuation of Box C.       ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | "&" document member of the same patent family |

| Date of the actual completion of the international search | Date of mailing of the international search report |
| --- | --- |
| 02/09/2014 | **(05/09/2014)** |
| Name and mailing address of the ISA/ <br><br> OFICINA ESPAÑOLA DE PATENTES Y MARCAS <br> Paseo de la Castellana, 75 - 28071 Madrid (España) <br> Facsimile No.: 91 349 53 04 | Authorized officer <br> A. Rua Aguete <br><br> Telephone No. 91 3498518 |

Form PCT/ISA/210 (second sheet) (July 2009)

## INTERNATIONAL SEARCH REPORT

| International application No. |
| --- |
| PCT/ES2014/070509 |

| C (continuation). | DOCUMENTS CONSIDERED TO BE RELEVANT | |
| --- | --- | --- |
| Category * | Citation of documents, with indication, where appropriate, of the relevant passages | Relevant to claim No. |
| A | KR 20090131782 A (NANO SOLUTION CPO LTD) 19.06.2008, (abstract) [on line] Abstract from base of datos EPODOC. Retrieved from EPOQUE | 1-20 |
| A | LLOBET. Descomposición catalítica of biogas. Instituto of Carboquímica, September 2010 | 1-20 |
| A | KONG et al. Silicon nanoparticles encapsulated in hollow graphitized carbon nanofibers for lithium ion battery anodes. Nanoscale, Vol 5, 2013, página2967 a 2973 | 1-20 |

Form PCT/ISA/210 (continuation of second sheet) (July 2009)

## INTERNATIONAL SEARCH REPORT

Information on patent family members

International application No.

PCT/ES2014/070509

| Patent document cited in the search report | Publication date | Patent family member(s) | Publication date |
|---|---|---|---|
| KR20090131782 A | 30.12.2009 | KR101021581B B1 | 17.03.2011 |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- ES 2345805, Suelves
- US 20060257310 A

**Non-patent literature cited in the description**

- **S. D. ROBERTSON.** *Carbon,* 1970, vol. 8, 365-368
- **Y. LI et al.** *Catalysis Today,* 2011, vol. 162, 1-48
- **A. RAMOS et al.** *Carbon,* 2013, vol. 59, 2-32
- **GARCÍA et al.** *Carbon,* 2009, vol. 47, 2563-79
- **CAMÉAN et al.** *Carbon,* 2012, vol. 50, 5387-94
- **CAMEÁN et al.** *Journal of Power Sources,* 2012, vol. 198, 303-7
- **S. DE LLOBET et al.** *International Journal of Hydrogen Energy,* 2012, vol. 37, 7067-7076
- **PINILLA et al.** *Fuel,* 2011, vol. 90, 2245-2253